# EUROPEAN PATENT APPLICATION

(11) **EP 4 358 371 A1**
(43) Date of publication of application: **24.04.2024**
(21) Application number: 22201981.2
(22) Date of filing: 17.10.2022
(51) Int. Cl.: H02K 5/22, H02K 11/20, H02K 11/25, H02K 11/35

(54) **ELECTRIC MOTOR ASSEMBLY**

(71) Applicant: ABB SCHWEIZ AG, 5400 Baden (CH)
(72) Inventor: DUDZIK, Rafal, 31-462 Cracow (PL); POLEDNIA, Filip, 43-300 Bielsko-Biala (PL)
(74) Representative: Maiwald GmbH

(57) **Abstract**

The present invention relates to an electric motor assembly (1) comprising an electric motor (2) and a connection box (4) for connecting cables (8) to the electric motor (2). The connection box (4) comprises at least one cable gland (6) for fixing at least one cable (8) to the connection box (4), wherein the cable gland (6) provides a sensing unit (50) for measuring an environmental condition of the motor (2). The cable gland (6) further comprises a processor (54) for analysing the measuring values and an information output device (58) for providing information about the measurement values and/or analyzation results.

## Description

### FIELD OF THE INVENTION

The present invention relates to an electric motor assembly.

### BACKGROUND OF THE INVENTION

For connecting cables to an electric motor, it is widely known to provide a connection box. Further, it is also known that in such a connection box measurement sensors can be provided for measuring the health status of the electric motor.

Prior art EP 1 637 890 B1 discloses a method for contactless monitoring the operating condition of an electric motor. On the electric motor, thereby a terminal box is provided. In the terminal box, sensor elements are provided for measuring the current and the wear of the motor. An analysing device is provided in the terminal box for analysing the measurement results.

### SUMMARY OF THE INVENTION

The problem to be solved by the present invention is to provide an electric motor assembly with which an environmental condition can be measured and which has a reduced size.

The problem is solved by an electric motor assembly, having the features of claim 1. Advantageous embodiments of the invention are specified in the dependent claims.

According to the invention, an electric motor assembly is proposed, comprising an electric motor and a connection box for connecting cables to the electric motor. The connection box thereby can be a conduit box or a terminal box. The connection box comprises at least one cable gland for fixing at least one cable to the connection box, wherein the cable gland provides a sensing unit for measuring an environmental condition of the motor. The cable gland further comprises a processor for analysing the measuring values and an information output device for providing information about the measurement values and/or analyzation results.

An environmental condition thereby is a measurable condition, which the cable gland undergo. According to the invention, the term processor comprises every electronic circuit or component, which is able for collecting and analyzing respectively processing the measurement values of the sensor. The expression information-output-device comprises devices which merely forwarding the information to another device or directly visually, acoustically or haptically providing the information.

The cable gland used in the electric motor assembly therefore is not only used for guiding a cable through a housing wall, but also provides information about the environment conditions. Therefore, a separate device for recording the environment conditions is not necessary. As the information are provided by the cable gland, space for a separate device can be saved, so that a motor assembly equipped with such a cable gland can be reduced in size. Further, as the cable gland not only measures the environment conditions but also analysing these conditions, predefined boundaries can be defined. When these boundaries are exceeded, the information output device issue a respective indication. This has the advantage that it can be early recognized that the boundaries are exceeded, so that a damage of the electric motor can be prevented. Expenses a damaged electric motor therefore can be saved. The cable gland also can be retrofitted to an existing electric motor.

In a preferred embodiment of the invention, the sensing unit comprises at least a vibration sensor for measuring the vibrations of the motor, so that an abnormal operation of the motor is detectable. With such a vibration sensor, it is possible to early detect a defect of a bearing of the motor. The bearing therefore can be changed before the motor fail.

In a further preferred embodiment, the cable is a power cable for supplying the electric motor, and the cable gland comprises a coil for measuring the supply current of the motor. The coil preferably is provided circumferentially surrounding the power cable. With such a coil, an easy and economic current measurement of the motor is possible.

Advantageously, the sensing unit, the processor and the information output device are powered by a coil of the cable gland. The coil thereby generates power via induction. A separate power supply or a battery therefore is not necessary. With such a power supply, a continuous operation of these parts can be guaranteed. Therefore, the motor to be monitored by the cable gland can be continuous monitored without the risk of missing a point where a value of the motor exceeds a limit value.

Preferably, the information output device comprises a radio communication device for transmitting the information to an external device. The radio communication device thereby can be a Bluetooth or other wireless communication device. By transmitting the data via a radio communication device a user can monitor the motor from a remote location. This is particularly advantageous for places that are difficult to access. Monitoring of motor values is therefore simplified.

In a preferred embodiment, the information output device comprises a lighting device, an audio device, a text device, a color indicator device and/or a picture-indicating device. Preferably, these devices are directly provided at the cable gland. By doing so, a user directly optically or acoustically get information about the condition of the motor. The output of information therefore is simplified.

Advantageously, the processor, the sensing unit and/or the information output device are provided on a common printed circuit board. A printed circuit board can be designed as a small part. As the respective parts are arranged on a common circuit board, these parts can be provided in a small manner. Accordingly, for these parts only a small space is necessary, so that they can be provided in a cable gland.

In a further preferred embodiment, the printed circuit board is arranged to circumference a cable guided through the cable gland. The printed circuit board preferably is designed as a ring disc with a central hole through which the cable is guided. With such an arrangement, the size of the cable gland and of the motor assembly can be further reduced.

Preferably, the sensing unit comprises a temperature sensor and/or a magnetic field sensor. With these sensors, essential value of the electric motor can be measured. Therefore, no further measuring device is necessary.

### BRIEF DESCRIPTION OF THE DRAWINGS

The subject matter of the invention will be explained in more details in the following description illustrated in the drawings, in which:
- Figure 1: Embodiment of an electric motor assembly according to the present invention, and
- Figure 2: Embodiment of the cable gland according to the invention.

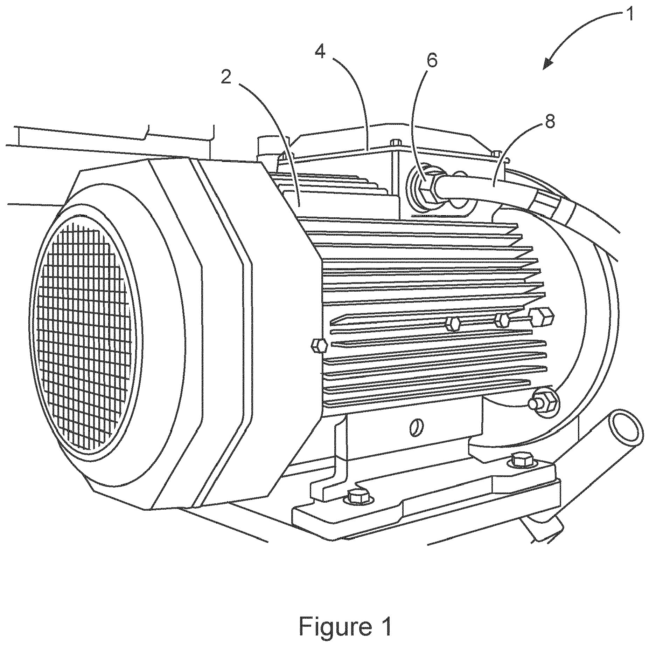

Figure 1 shows an embodiment of an electric motor assembly 1 according to the present invention. The motor assembly 1 comprises an electric motor 2 and a connection box 4. The connection box 4 comprises a cable gland 6, which is fixed to a housing wall of the connection box 4. By means of the cable gland 6, a cable 8 can be fixed to the connection box 4. The cable 8 thereby can be a power supply cable of the electric motor 2. In the connection box 4, the power supply cable 8 is connected to respective electrical contacts of the motor 2.

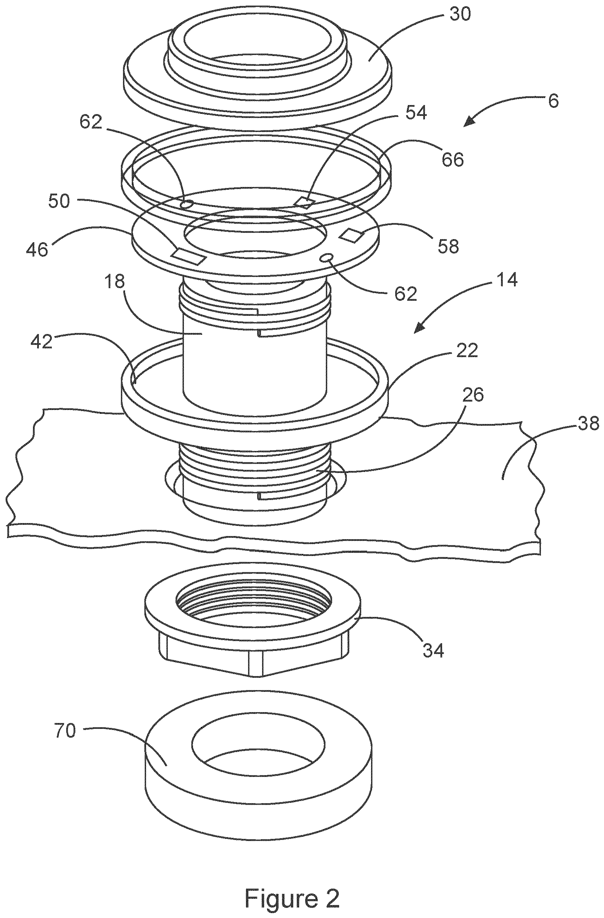

Figure 2 shows an embodiment of the cable gland 6 according to the invention. The cable gland 6 thereby comprises a base tube 14 having a cylindrical portion 18 through which the cable (not shown) can be passed through. The base tube 14 further comprises flange portion 22, which is integrally provided with the cylindrical portion 18 and which extends in a radial direction therefrom. In a region of both axial ends of the cylindrical portion 18, a thread 26 is provided. The cable gland 6 further comprises a first tightening nut 30 and a second tightening nut 34, which can be screwed onto the cylindrical portion 18 of the base tube 14. When the second tightening nut 34 is screwed to the cylindrical portion 18, a housing wall 38, which is provided between the flange portion 22 and the second tightening nut 34, is clamped between both parts, so that the cable gland 6 is fixed to the housing wall 38.

At a side facing to the first tightening nut 30 the flange portion 22 provides a coaxial recess 42. The cable gland 6 further comprises a ring shaped printed circuit board 46, which is shaped to fit into the coaxial recess 42 of the flange portion 22. Thereby, a total axial length of the cable gland 6 can be reduced. On the printed circuit board 46 a sensing unit 50 is provided, which in this embodiment comprises a vibration sensor, for measuring the vibration that the cable gland 6 receive. The printed circuit board 46 further comprises a processor 54 for collecting and analysing the measurement values of the vibration sensor.

On the printed circuit board 46 also an information output device 58 is provided. The information output device 58 in this embodiment comprises lighting device 62, which is provided by LED diodes. In case the processor 54 recognizes that the vibration values pass a limit value, a light signal is issued by the LED diodes 62. The light signal thereby can be a red light. For the visualization of the light signal the LED diodes 62 interact with a transparent ring 66, which is arranged between the first tightening nut 30 and the printed circuit board 46. The information output device 58 in this embodiment also comprises a radio communication device, with which the information can be transmitted via e.g. a Bluetooth connection.

For powering the information output device 58, the lighting device 62 and the processor a power supply 70 is provided. In this embodiment, the power supply is provided as a coil 70, which surrounds the cylindrical portion 18 of the base tube 14. The electric coil 70 itself in this embodiment is embedded in a plastic ring. The coil 70 also can be used as a current sensor, measuring the current of the cable 8 passing through the cylindrical part 18. Although, the coil 70 in this embodiment is provided behind the second tightening nut 34, the coil 70 also can be arranged between the housing wall 38 and the second tightening nut 34.

### List of reference numbers

- 1: electric motor assembly
- 2: electric motor
- 4: connection box
- 6: cable gland
- 8: cable
- 14: base tube
- 18: cylindrical portion
- 22: flange portion
- 26: thread
- 30: first tightening nut
- 34: second tightening nut
- 38: housing wall
- 42: coaxial recess
- 46: printed circuit board
- 50: sensing unit
- 54: processor
- 58: information output device
- 62: lighting device/ LED diodes
- 66: transparent ring
- 70: power supply/Coil

## Claims

1. Electric motor assembly (1) comprising an electric motor (2) and a connection box (4) for connecting cables (8) to the electric motor (2), the connection box (4) comprises at least one cable gland (6) for fixing at least one cable (8) to the connection box (4), wherein the cable gland (6) provides a sensing unit (50) for measuring an environmental condition of the motor (2), the cable gland (6) further comprises a processor (54) for analysing the measuring values and an information output device (58) for providing information about the measurement values and/or analyzation results.

2. Electric motor assembly (1) according to claim 1, **characterized in that** the sensing unit (50) comprises at least a vibration sensor for measuring the vibrations of the motor (2), so that an abnormal operation of the motor (2) is detectable.

3. Electric motor assembly (1) according to claim 1 or 2, **characterized in that** the cable (8) is a power cable for supplying the electric motor (2), and the cable gland (6) comprises a coil (70) for measuring the supply current of the motor (2).

4. Electric motor assembly (1) according to one of the preceding claims, **characterized in that** the sensing unit (50), the processor (54) and the information output device (58) are powered by a coil (70) of the cable gland (6).

5. Electric motor assembly (1) according to one of the preceding claims, **characterized in that** the information output device (58) comprises a radio communication device for transmitting the information to an external device.

6. Electric motor assembly (1) according to one of the preceding claims, **characterized in that** the information output device (58) comprises a lighting device (62), an audio device, a text device, a colour indicator device and/or a picture-indicating device.

7. Electric motor assembly (1) according to one of the preceding claims, **characterized in that** the processor (54), the sensing unit (50) and/or the information output device (58) are provided on a common printed circuit board (46).

8. Electric motor assembly (1) according to one of the preceding claims, **characterized in that** the printed circuit board (46) is arranged to circumference a cable (8) guided through the cable gland (6).

9. Electric motor assembly (1) according to one of the preceding claims, **characterized in that** the sensing unit (50) comprises a temperature sensor and/or a magnetic field sensor.
